# EUROPÄISCHE PATENTSCHRIFT

(11) **EP 1 496 240 B1**
(45) Veröffentlichungstag und Bekanntmachung des Hinweises auf die Patenterteilung: **21.12.2016**
(21) Anmeldenummer: 04102597.4
(22) Anmeldetag: 08.06.2004
(51) Int. Cl.: F02M 35/022, B01D 45/12

(54) **Abscheidesystem**
Separation system
Système de séparation

(30) Priorität: 02.07.2003 DE 10329739
(43) Veröffentlichungstag der Anmeldung: 12.01.2005
(73) Patentinhaber: MANN+HUMMEL GmbH, 71638 Ludwigsburg (DE)
(72) Erfinder: MAIER, Stefan, 74354, Besigheim (DE); WEBER, Marcus, 74336 Brackenheim (DE); WEBER, Andreas, 71691 Freiberg (DE)

(56) Entgegenhaltungen:
- EP-A1- 0 518 221
- CH-A5- 621 490
- DE-A1- 19 738 912
- DE-U1- 29 723 843
- GB-A- 1 278 674
- US-A- 3 590 791
- US-A1- 2003 106 292

## Beschreibung

### Stand der Technik

Die Erfindung betrifft eine Rohluftleitung nach dem Oberbegriff des unabhängigen Anspruchs 1.

Die US 2003/106292 A1 zeigt einen Zentrifugalabscheider mit einer konischen Abscheidekammer in Form eines Zyklons und einer Rückflusssperrwand zur Trennung von Öl aus Luft.

Aus der EP 0 518 221 A1 ist ein Tropfenabscheider mit Lamellen bekannt, welcher Fangtaschen für abzuscheidende Tropfen aus einer Gasströmung aufweist.

Der GB1 278 674 A ist eine Vorrichtung zur Abscheidung von Flüssigkeitspartikeln aus einem Hochgeschwindigkeitsgasstrom mit einer Vielzahl von Wandabschnitten zu entnehmen, an denen die Flüssigkeitspartikel abgeschieden werden.

Aus der US 3 590 791 A ist eine Brennkraftmaschine mit einem Gebläse zur Luftzuführung und Luftreinigung bekannt, bei der die Verbrennungsluft mit Hilfe eines Lüfterrades in einen Zentrifugalabscheider geleitet wird, der schwere Partikel der Außenwand entlang unter eine Trennplatte führt.

Der DE 297 23 843 U1 und der zugehörigen DE 197 38 912 A1 ist eine Vorrichtung zum Abscheiden von Feststoffen aus einem insbesondere gasförmigen Trägerstrom zu entnehmen.

Aus der DE 100 29 498 ist ein Abscheidesystem für die Ansaugleitung einer Brennkraftmaschine bekannt. Das Abscheidesystem dient zum Abscheiden von Wassergischt aus Luft. Das Ansaugsystem selbst weist einen Rohlufteinlass, eine mit dem Rohlufteinlass verbundene Rohluftleitung und einen sich an die Rohluftleitung anschließenden Wasserabscheider auf. In der Rohluftleitung wird ein Drall erzeugt, wodurch die angesaugte Luft in der Rohluftleitung rotiert. Die Rohluftleitung ist korrespondierend mit der Brennkraftmaschine verbunden. Der Wasserabscheider weist ein Innenrohr und ein Außenrohr auf, welche koaxial zueinander angeordnet sind. Durch den koaxialen Aufbau des Wasserabscheiders strömt die Ansaugluft ohne Umlenkung in die nachfolgenden Bauteile, wodurch keine nennenswerten Druckverluste verursacht werden.

Das im Stand der Technik beschriebene Ansaugsystem arbeitet in einem bestimmten Durchflussbereich.

### Aufgabe der Erfindung

Der Erfindung liegt die Aufgabe zugrunde, eine Rohluftleitung mit einem Abscheidesystem zum Abscheiden von Flüssigkeit aus einem Luftstrom eines Ansaugsystems für eine Brennkraftmaschine eines Kraftfahrzeuges zu schaffen, welches einfach aufgebaut ist und eine hohe Abscheideleistung sicherstellt.

### Lösung

Diese Aufgabe wird durch die Merkmale des unabhängigen Anspruchs 1 gelöst.

Der wesentliche Vorteil des Abscheidesystems liegt darin, dass lediglich ein Auslass nach einer Krümmung einer Einlassleitung vorgesehen sein muss, welcher den Querschnitt der Leitung nicht oder nur unwesentlich verringert. Dieser Auslass ist derart zu gestalten, dass die abzuscheidende Flüssigkeit nicht von dem Luftstrom mitgerissen werden kann. Der Auslass kann als Vertiefung gestaltet sein, er ist dort anzuordnen, wo sich aufgrund der Krümmung und der Luftumkehr die Flüssigkeit aus dem Luftstrom aufgrund der Fliehkraftwirkung niederschlägt und entfernt werden kann. Gemäß einer Ausgestaltung der Erfindung besteht der Auslass aus einer Querschnittsvergrößerung der Leitung. In diese Leitung ragt ein Schälkragen hinein, welcher gemeinsam mit der Querschnittsvergrößerung eine Auslassrinne bildet. Der Schälkragen ist beispielsweise als Flügel ausgestaltet, welcher den Luftstrom ungehindert passieren lässt, allerdings dafür sorgt, dass abgeschiedene Flüssigkeit nicht mehr von dem Luftstrom mitgenommen werden kann.

Zweckmäßigerweise ist der Schälkragen mit einer Umkehrfläche versehen. Der Auslass hat gemäß einer weiteren Ausgestaltung eine Flüssigkeitsauffangzone, die ebenfalls dafür sorgt, dass die Flüssigkeit nicht mehr in den Luftstrom umgelenkt werden kann. Die Flüssigkeitsauffangzone ist mit einem Wasserablauf versehen.

Weiterbildungsgemäß ist der Flüssigkeitsauslass mit einem Auslassventil verschlossen. Dieses Ventil öffnet beispielsweise bei einem bestimmten geostatischen Druck.

Das Abscheidesystem wird bei einem Ansaugsystem für eine Brennkraftmaschine eines Kraftfahrzeuges verwendet. Dort ist es in der Rohluftleitung angeordnet, und zwar unmittelbar nach dem Einlass für die Rohluft. Dieser Einlass ist als abgewinkelte Ansaugtulpe gestaltet.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: die Draufsicht auf ein schematisch dargestelltes Abscheidesystem und
- Figur 2: die Seitenansicht auf ein offen dargestelltes Abscheidesystem im Rohlufteinlass einer Brennkraftmaschine eines Fahrzeugs.

### Beschreibung der Ausführungsbeispiele

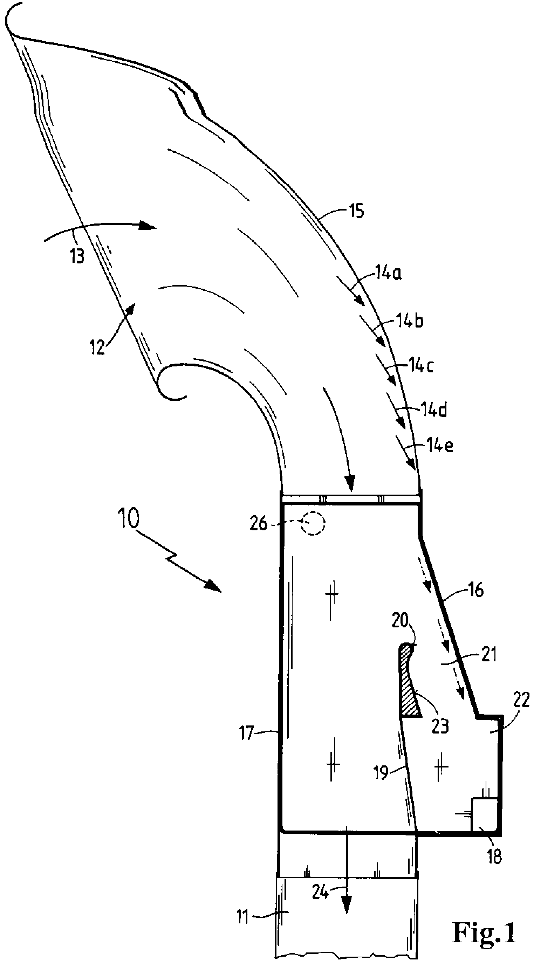

Figur 1 zeigt ein Abscheidesystem 10 in der Rohluftleitung 11 einer Brennkraftmaschine. Die der Brennkraftmaschine zuzuführende Luft strömt über eine Einlasstulpe 12 des Abscheidesystems 10 und die Rohluftleitung 11 zu einem hier nicht dargestellten Partikelfilter und von dort zu der ebenfalls nicht dargestellten Brennkraftmaschine. Die Einlasstulpe 12 ist, wie dargestellt, mit einer Krümmung versehen. Diese Krümmung beträgt näherungsweise 90 Grad. Die gemäß dem Pfeil 13 einströmende Luft erfährt durch diese Krümmung eine Richtungsumkehr, wobei in der Luft enthaltene Flüssigkeit gemäß den Pfeilen 14 a - e aufgrund der Fliehkräfte an die Wandung 15 geleitet wird. Dort wird sich die Flüssigkeit aufgrund des Mitnahmeeffektes durch die einströmende Luft in Richtung Abscheidesystem bewegen und im Abscheidesystem an der Wand 16 entlangströmen. Die Einlasstulpe 12 hat einen näherungsweise kreisförmigen Querschnitt, sie kann auch rechteckförmig gestaltet sein. Der Querschnitt der Einlasstulpe setzt sich im Querschnitt des Abscheidesystems 10 und der Rohluftleitung 11 fort. Das Abscheidesystem 10 besteht aus einem Gehäuse 17, welches einen Wasserablauf 18 aufweist.

Innerhalb des Gehäuses befindet sich ein Schälkragen 19. Dieser Schälkragen 19 verringert den Durchtrittsquerschnitt für die durchströmende Luft nur geringfügig und läßt zwischen Wand 16 und der Vorderkante 20 einen Durchtrittsquerschnitt 21 offen. Dieser Querschnitt ist so hoch bemessen, dass selbst bei einem erhöhten Flüssigkeitsanfall diese Flüssigkeit aufgenommen werden kann. Nach diesem Durchtrittsquerschnitt ist eine Flüssigkeitsauffangzone 22 vorgesehen, diese Zone dient gleichzeitig zum Sammeln der Flüssigkeit und zum Zuführen derselben zu dem Wasserablauf 18. Der Schälkragen 19 weist eine Umschlagkante 23 auf, welche an ihrem Ende scharfwinklig zu der Schälkragenwand abgewinkelt ist. Durch diesen Aufbau wird ein Zurückfließen der abgetrennten Flüssigkeit in den Luftstrom verhindert. Die von der Flüssigkeit abgetrennte Rohluft verlässt das Abscheidesystem 10 gemäß dem Pfeil 24 und gelangt als nächstes zu einem Luftfilter.

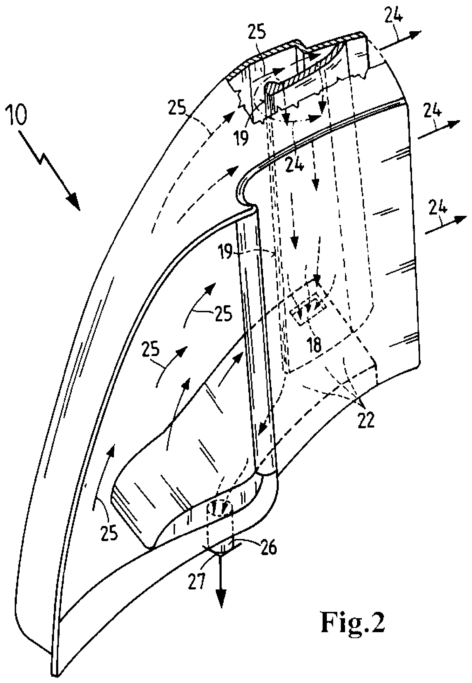

Figur 2 zeigt das Abscheidesystem 10, welches einen, im Wesentlichen rechteckförmigen Querschnitt aufweist. Die Rohluft tritt gemäß Pfeil 25 in das System ein. Der Schälkragen 19 trennt einen eventuell entstehenden Flüssigkeitsstom von der Rohluft. Aufgrund der Schwerkraft, strömt das sich hinter dem Schälkragen sammelnde Wasser, bzw. die Flüssigkeit nach unten in einen Wasseraustragsbereich 25. Dieser Wasseraustragsbereich ist mit einem Rohr 26 versehen, in welchem sich die Flüssigkeit ebenfalls sammelt. Ein Ventil 27 verschließt dieses Rohr 26 und öffnet, sofern die Wassersäule in dem Rohr 26 ein bestimmtes Maß übersteigt. Das Ventil kann ein Gummilippenventil sein, welches keinerlei Wartung bedarf.

## Patentansprüche

1. Rohluftleitung umfassend ein Abscheidesystem (10) einer Brennkraftmaschine zum Abscheiden von Flüssigkeit aus einem Luftstrom eines Ansaugsystems für eine Brennkraftmaschine eines Kraftfahrzeuges, bestehend aus einer Einlassleitung (12), einer Auslassleitung (11) und einem zwischen Einlassleitung (12) und Auslassleitung (11) geschalteten Abscheider, **dadurch gekennzeichnet, dass** die Einlassleitung (12) unmittelbar vor dem Abscheider eine Krümmung von > 45° aufweist und dem Außenbogen (15) der Krümmung nachgeordnet ein Auslass vorgesehen ist, welcher den Querschnitt der Leitung nicht oder nur unwesentlich verringert und dieser Auslass derart gestaltet ist, dass die abzuscheidende Flüssigkeit nicht von dem Luftstrom mitgerissen werden kann, wobei das Abscheidesystem (10) in einer Rohluftleitung (11) unmittelbar nach dem Einlass für die Rohluft angeordnet ist, wobei der Einlass als abgewinkelte Ansaugtulpe (12) gestaltet ist.

2. Rohluftleitung nach Anspruch 1, **dadurch gekennzeichnet, dass** der Auslass aus einer Querschnittsvergrößerung der Leitung besteht und in die Leitung ein Schälkragen (19) hineinragt, welcher gemeinsam mit der Querschnittsvergrößerung eine Auslassrinne bildet.

3. Rohluftleitung nach Anspruch 1 oder 2, **dadurch gekennzeichnet, dass** der Auslass in eine Flüssigkeitsauffangzone (22) übergeht, die eine Strömungsberuhigung erzielt und mit einem Wasserablauf (18) versehen ist.

4. Rohluftleitung nach einem der vorherigen Ansprüche, **dadurch gekennzeichnet, dass** der Flüssigkeitsauslass über ein Auslassventil verfügt.

5. Ansaugsystem für eine Brennkraftmaschine eines Kraftfahrzeugs mit einem Rohlufteinlass, einer mit dem Rohlufteinlass verbundenen Rohluftleitung (11) nach einem der vorherigen Ansprüche.

## Claims

1. Raw air duct comprising a separation system (10) of an internal combustion engine for separating liquid from an airflow of an intake system for an internal combustion engine of a motor vehicle, consisting of an inlet conduit (12), an outlet conduit (11) and a separator disposed between the inlet conduit (12) and the outlet conduit (11), **characterized in that** the inlet conduit (12) features directly in front of the separator a curvature of > 45° and that an outlet, which does not reduce the cross section of the conduit at all or only insignificantly, is provided downstream of the outer bend (15) of the curvature and that this outlet is designed in such a way that the liquid to be separated cannot be carried away by the air flow, wherein the separation system (10) is disposed in a raw air duct (11) directly after the inlet for the raw air, wherein the inlet is designed as bent suction tulip (12).

2. Raw air duct according to claim 1, **characterized in that** the outlet consists of a cross-section enlargement of the conduit and that a peeling collar (19), which forms together with the cross-section enlargement an outlet channel, protrudes into the conduit.

3. Raw air duct according to claim 1 or 2, **characterized in that** the outlet leads into a liquid collecting zone (22), which realizes a flow stabilization and is provided with a water outlet (18).

4. Raw air duct according to one of the above claims, **characterized in that** the liquid outlet has an outlet valve.

5. Intake system for an internal combustion engine of a motor vehicle with a raw air intake, a raw air duct (11) connected with the raw air intake according to one of the above claims.

## Revendications

1. Conduite d'air non filtré comprenant un système de séparation (10) d'un moteur à combustion interne destiné à séparer du liquide d'un flux d'air d'un système d'aspiration pour un moteur à combustion interne d'un véhicule automobile, constitué d'une conduite d'entrée (12), d'une conduite de sortie (11) et d'un séparateur placé entre la conduite d'entrée (12) et la conduite de sortie (11), **caractérisée en ce que** la conduite d'entrée (12) présente, directement avant le séparateur, une courbure > 45°, et qu'une sortie, laquelle ne diminue pas, ou diminue uniquement de façon négligeable, la section transversale de la conduite, est prévue en aval de l'arc extérieur (15) de la courbure, et que cette sortie est exécutée de manière à ce que le liquide devant être séparé ne puisse pas être entraîné par le flux d'air, le système de séparation (10) étant disposé dans une conduite d'air non filtré (11) directement en aval de l'entrée pour l'air non filtré, l'entrée étant réalisée en tant que tulipe d'aspiration (12) coudée.

2. Conduite d'air non filtré selon la revendication 1, **caractérisée en ce que** la sortie est un agrandissement de la section transversale de la conduite et qu'un collet de séparation (19) formant une rigole de sortie avec l'agrandissement de la section transversale de la conduite pénètre dans la conduite.

3. Conduite d'air non filtré selon la revendication 1 ou 2, **caractérisée en ce que** la sortie débouche dans une zone de collection de liquide (22) qui stabilise l'écoulement et est pourvue d'un écoulement d'eau (18).

4. Conduite d'air non filtré selon l'une des revendications précédentes, **caractérisée en ce que** la sortie de liquide dispose d'une soupape d'échappement.

5. Système d'aspiration pour un moteur à combustion interne d'un véhicule automobile avec une entrée d'air non filtré, une conduite d'air non filtré (11) reliée à l'entrée d'air non filtré selon l'une des revendications précédentes.
